# EUROPÄISCHE PATENTSCHRIFT

(11) **EP 3 503 731 B1**
(45) Veröffentlichungstag und Bekanntmachung des Hinweises auf die Patenterteilung: **03.03.2021**
(21) Anmeldenummer: 17767723.4
(22) Anmeldetag: 24.08.2017
(51) Int. Cl.: A01N 59/20, A01P 3/00, A01N 59/04

(54) **KUPFER ENTHALTENDES PRÄPARAT ZUR VERWENDUNG ALS PFLANZENSCHUTZMITTEL**
COPPER-CONTAINING PREPARATION FOR USE AS A PLANT PROTECTION AGENT
PRÉPARATION CONTENANT DU CUIVRE POUR UNE UTILISATION EN TANT QU'AGENT DE PROTECTION PHYTOSANITAIRE

(30) Priorität: 25.08.2016 DE 102016010427
(43) Veröffentlichungstag der Anmeldung: 03.07.2019
(73) Patentinhaber: Certis Europe B.V., 3605 MA Maarssen (NL)
(72) Erfinder: DIEPHAUS, Volker, 25337 Kölln-Reisiek (DE); SIMON, Andre, 22081 Hamburg (DE); WELTE, Herbert, 22335 Hamburg (DE)
(74) Vertreter: Williams, Andrea
(86) Internationale Anmeldenummer: PCT/DE2017/000276
(87) Internationale Veröffentlichungsnummer: WO 2018/036579

(56) Entgegenhaltungen:
- US-A- 5 037 634
- DATABASE WPI 12. Februar 1983 (1983-02-12) Thomson Scientific, London, GB; AN 1983-28346K XP002774550, & JP S58 23609 A (RIKAGAKU KENKYUSHO) 12. Februar 1983 (1983-02-12)
- DATABASE WPI Week 200438 Thomson Scientific, London, GB; AN 2004-405637 & JP 2004 149473 A (SUMITOMO CHEM CO LTD) 27 May 2004 (2004-05-27)
- DATABASE WPI Week 200703 Thomson Scientific, London, GB; AN 2007-022044 & JP 2006 327982 A (SUMITOMO CHEM CO LTD) 7 December 2006 (2006-12-07)

## Beschreibung

Die Erfindung betrifft ein Präparat zur Verwendung als Pflanzenschutzmittel, inbesondere mit einer fungiziden Wirkung. Das Präparat enthält als Wirkstoff unter anderem Kupfer, bei einer bevorzugten Anwendung in Form von Kupferionen.

Als kupferhaltiger Bestandteil ist insbesondere an die Verwendung von Kupferhydroxid gedacht. Alternativ ist es auch möglich, Kupferoxychlorid, Kupferoxidul, tribasisches Kupfersulfat oder Bordeauxbrühe zu verwenden.

JPS5823609 beschreibt eine landwirtschaftliche Zusammensetzung, die Natrium- oder Kaliumhydrogencarbonat, eine Kupferverbindung und ein Netzmittel umfasst. JP2004149473 beschreibt ein Saatgutbehandlungsmittel zur Bekämpfung von Reisbakterienkrankheiten, umfassend Kupfersulfat und Natriumhydrogencarbonat. JP2006327982 beschreibt ein Saatgutbehandlungsmittel zur Bekämpfung von Gibberella fujikuroi, umfassend Kupfersulfat und Natriumhydrogencarbonat.

In einem ersten Aspekt der Erfindung wird ein Präparat zur Verwendung als Pflanzenschutzmittel bereitgestellt, das mindestens eine kupferhaltige Komponente, mindestens eine basische Komponente und mindestens ein Netzmittel aufweist;
dadurch gekennzeichnet, dass das Netzmittel ausgewählt ist aus Docusatnatrium oder einer Kombination aus Docusatnatrium und Natriumdodecylsulfat, und dass die basische Komponente Kaliumhydrogencarbonat und/oder Natriumhydrogencarbonat ist.

Ebenfalls hierin beschrieben wird, dass die kupferhaltige Substanz mit einem basischen Stoff kombiniert wird. Dies kann beispielsweise ein Bicarbonat-lonen, insbesondere -Anionen, freisetzendes Salz bzw. freisetzender Stoff oder ein CO2 enthaltender bzw. freisetzender Stoff sein. Gedacht ist insbesondere an Backpulver oder eine unmittelbare Zufuhr von Kohlendioxid aus entsprechenden Vorratskartuschen. Eine weitere Variante besteht in der Verwendung von Kupferhydrogencarbonat, Kaliumhydrogencarbonat oder Natriumhydrogencarbonat.

Die Wirksamkeit kann verbessert werden, wenn mindestens ein Netzmittel zugesetzt wird. Als Netzmittel kann beispielsweise Natriumdodecylsulfat und/oder Docusatnatrium verwendet werden.

Erfindungsgemäß wurde überraschenderweise festgestellt, dass die Kombination von Kupferhydroxid mit einer basischen Komponente, beispielsweise Kaliumhydrogencarbonat, die freie Verfügbarkeit von Kupferionen im sich ergebenden Flüssigpräparat erhöht. Bislang bestand die Auffassung, dass eine entsprechende erhöhte Verfügbarkeit von freien Kupferionen nur durch eine Ansäuerung zu erreichen ist. Erfindungsgemaß wird hingegen der Effekt genutzt, dass sich Aquo-Carbonato-Komplexe ausbilden, deren Bildung in Gegenwart von Bicarbonat unter den herrschenden Bedingungen in einer Spritzbrühe und auf einer Pflanzenoberfläche begünstigt wird.

Mit dem formulierten Kaliumhydrogencarbonat wurde eine erfindungsgemäße Kombination gefunden, die bei allen untersuchten Kupferformulierungen eine deutliche synergistische Wirkung generiert.

Der der Erfindung zugrunde liegende Wirkungsmechanismus ist die Bildung von intermediären Carbonato-Kupfer-Komplexen mit einem Hydrogencarbonat, bevor es als basisches Kupfercarbonat festgelegt wird.

Die synergistische Wirkung der Kombination Bicarbonat mit Kupfersalz ist auf die Bildung von verschiedenen Aquo-Carbonato-Komplexen im wässrigen Medium einer Spritzbrühe bzw. auf einer behandelten Pflanzenoberfläche zurückzuführen.

Je nach pH-Wert liegen zwischen pH 5,5 und pH 8 unterschiedliche heteroleptische Kupferkomplexe vor, in denen ein Zentralteilchen eines Komplexes durch einzahnige Aquo- sowie potenziell mehrzahnige Carbonato-Liganden in unterschiedlicher Zusammensetzung komplexiert wird. Denkbar sind auch koordinative Bindungen zwischen axial stehenden Aquo-Liganden mit aquatorial stehenden Carbonato-Liganden.

Bei Vorlage eines schwerlöslichen kristallinen Kupfersalzes in einem wässrigem Medium, führt die Gegenwart gelöster Bicarbonat-lonen und die damit verbundene Ausbildung der genannten Komplexstrukturen zu einer Erhöhung des Löslichkeitsproduktes der eingesetzten Kupferkomponente und so zu einer vermehrten Freisetzung von freien, fungizid wirksamen Cu-lonen gemäß dem erfindungsgemäßen Präparat. Potentielle zusätzliche Quellen fungizid wirksamer Cu-lonen sind die entstehenden Aquo-carbonato-Komplexe.

Beispielhaft laufen folgende Reaktionen bei der Herstellung bzw. Anwendung eines erfindungsgemäßen Präparates reversibel ab:

CuX₂ ⇄ Cu_{aq}²⁺ + 2 X_{aq}⁻

und

Cu_{aq}²⁺ + 2 H₂O + 3 HCO₃⁻ ⇄ [Cu (H₂O)₂ (CO₃)3]⁴⁻ + 3 H_{aq}⁺.

Bei einer Anwendung des erfindungsgemäßen Präparates als Pflanzenschutzmittel wird die Aktivität der freien Cu-lonen dadurch in einem Maße erhöht, dass bei gleicher Kupferaufwandmenge die fungizide Wirkung signifikant verbessert wird. Gleichzeitig werden, bedingt durch die spezifischen Komplexbildungskonstanten der gebildeten Aquo-Carbonato-Komplexe, nur so viele freie Cu-lonen gebildet, dass es nicht zu grundsätzlich unvertretbaren phytotoxischen Auswirkungen auf die behandelten Pflanzen kommt.

Eine Anwendung erfolgt bevorzugt als Fungizid im Gemüseanbau, Hopfenbau, Weinbau oder Ackerbau. Beispielsweise für Spargel, Hopfen oder Weinpflanzen.

In den Zeichnungen sind der Stand der Technik und Ausfhmngsbeispiele der Erfindung schematisch dargestellt. Es zeigen:

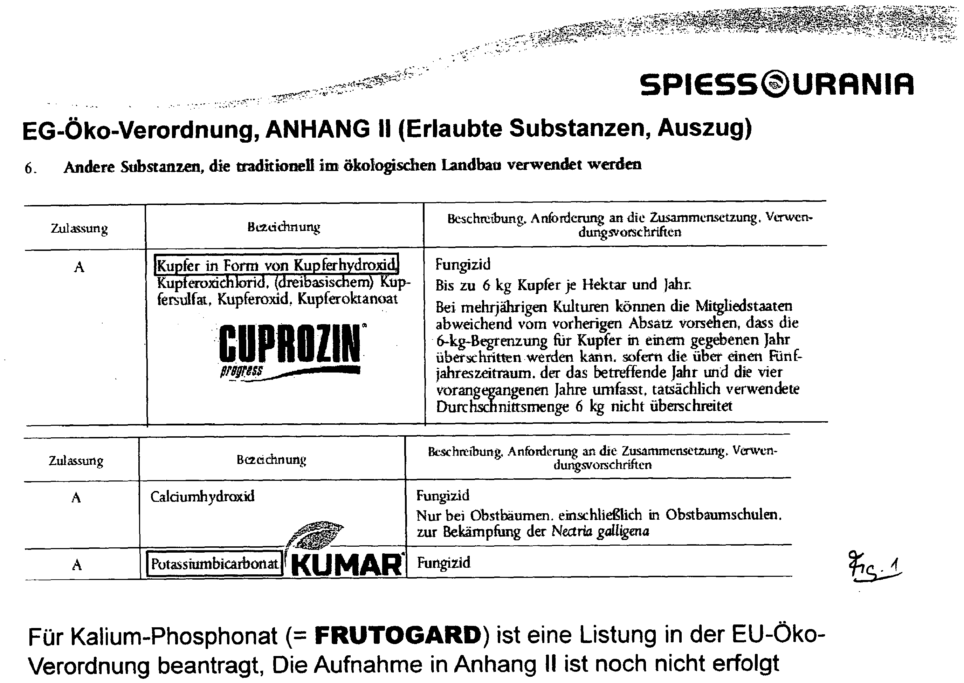

Fig. 1 eine Übersicht zu Produkten gemäß dem Stand der Technik,

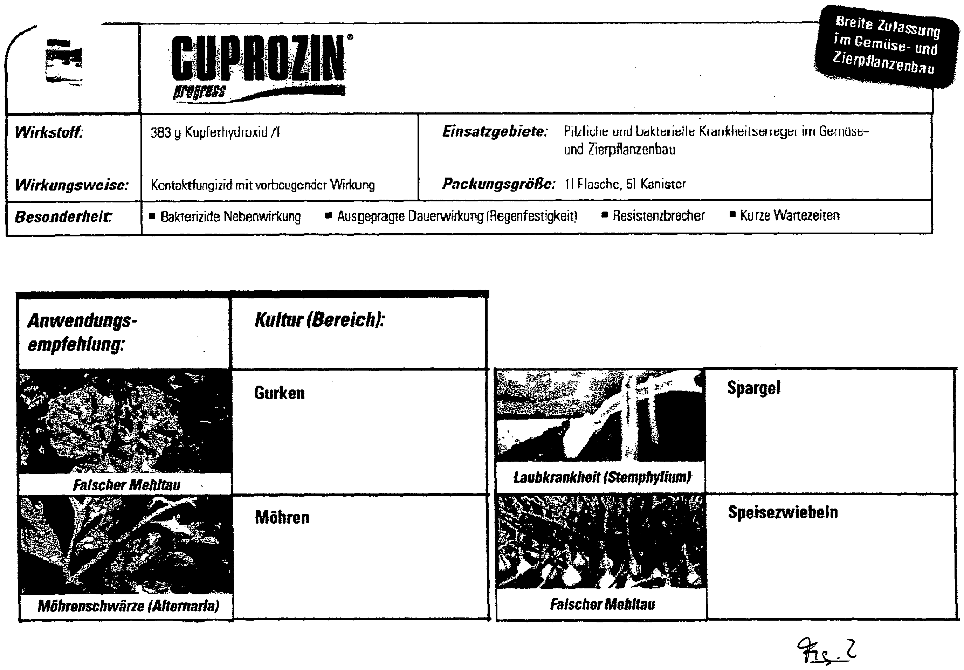

Fig. 2 eine weitere Dokumentation zum Stand der Technik,

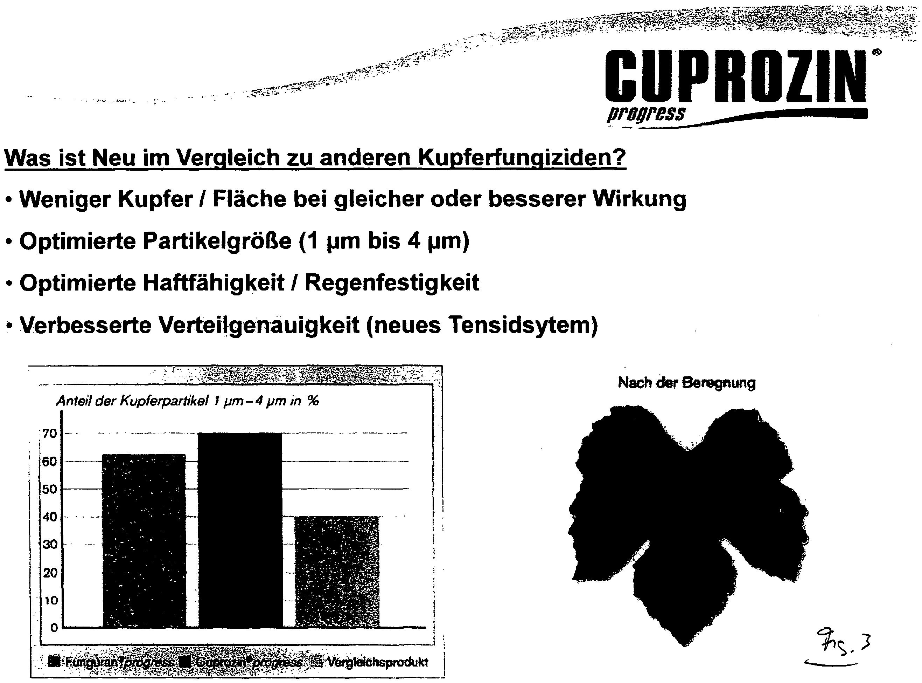

Fig. 3 eine Zusammenstellung zu erfindungsgemäßen Vorteilen,

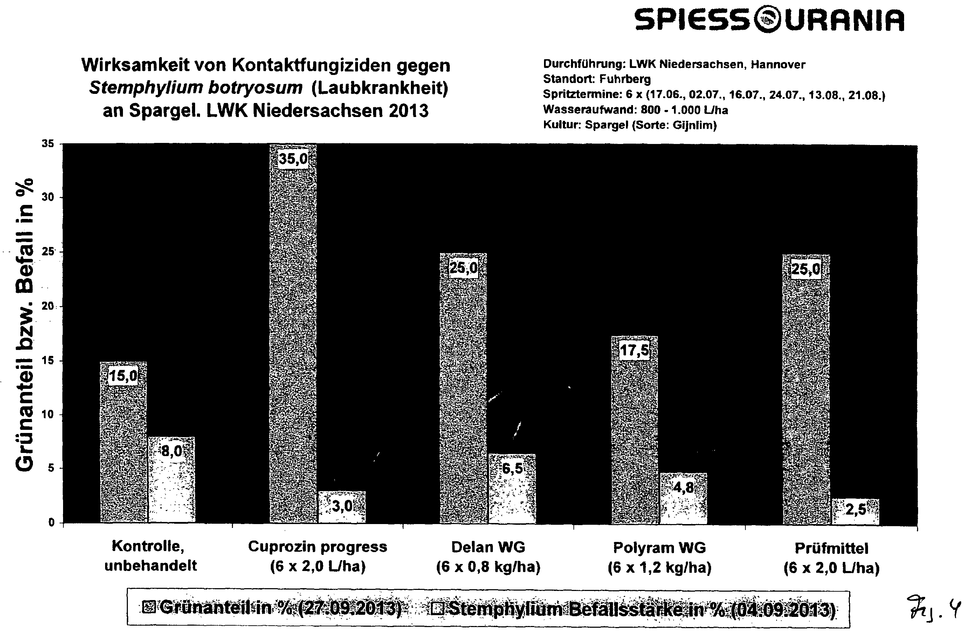

Fig. 4 ein Diagramm zur Dokumentation der Wirksamkeit,

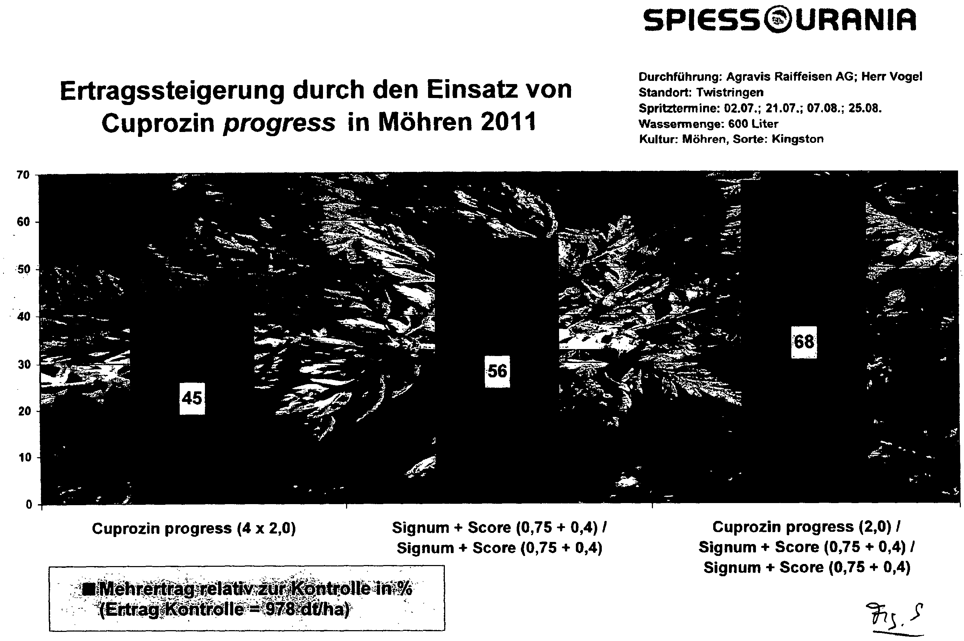

Fig. 5 ein Diagramm zur Verdeutlichung von Ertragssteigerungen,

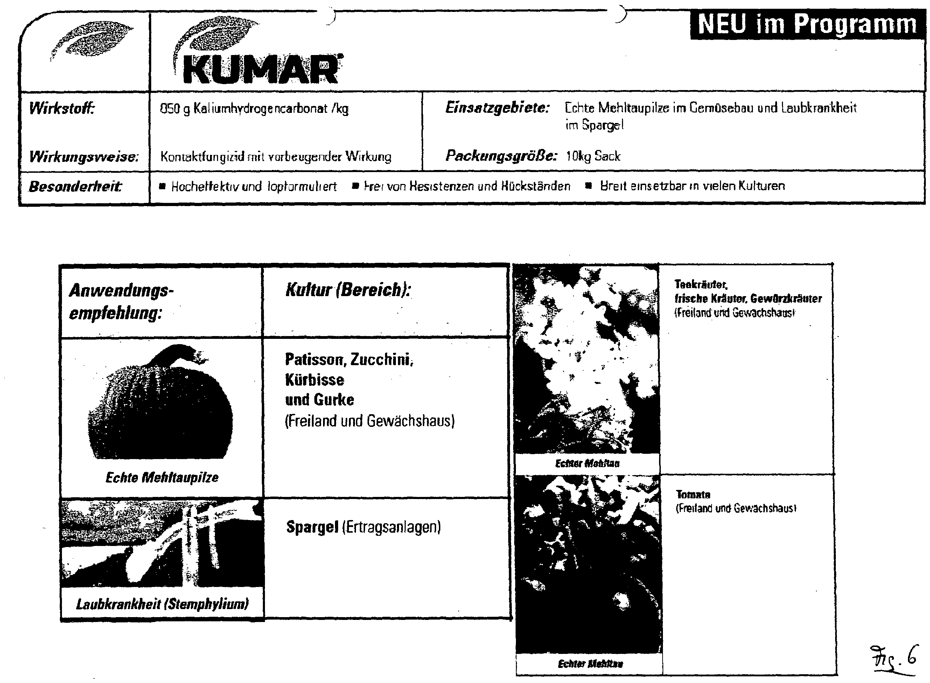

Fig. 6 weitere erfindungsgemäße Anwendungen,

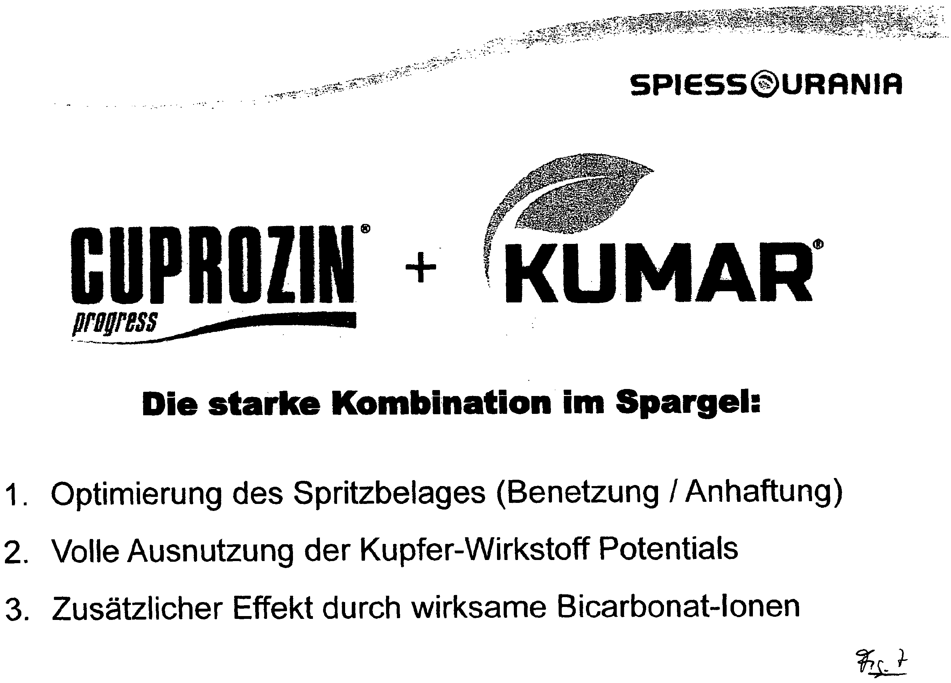

Fig. 7 eine Zusammenstellung von Vorteilen einer Wirkstoffkombination,

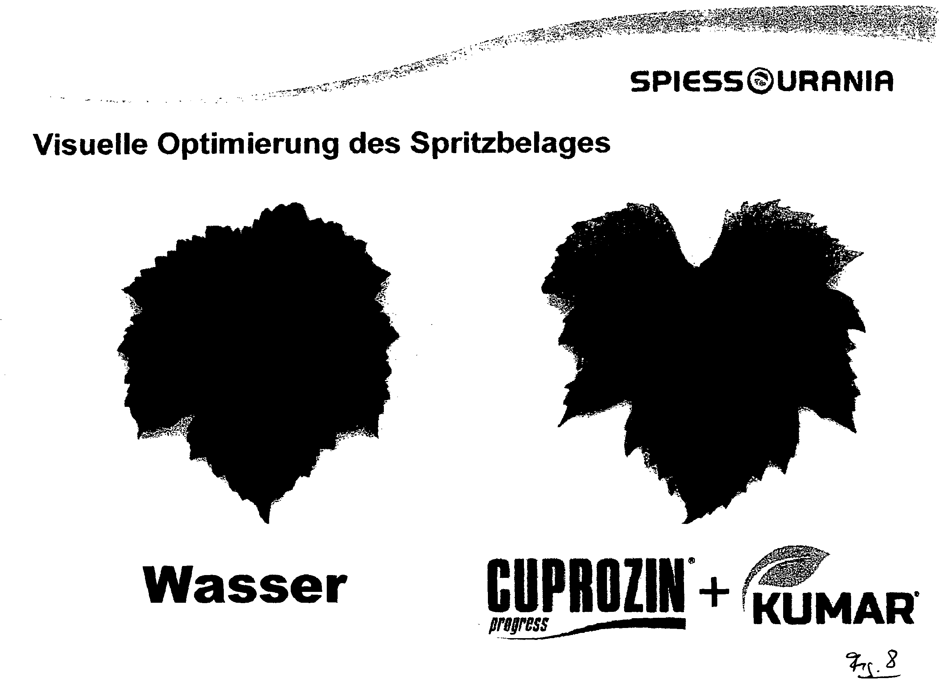

Fig. 8 Darstellungen von Blattern nach einer Anwendung des Spritzmittels,

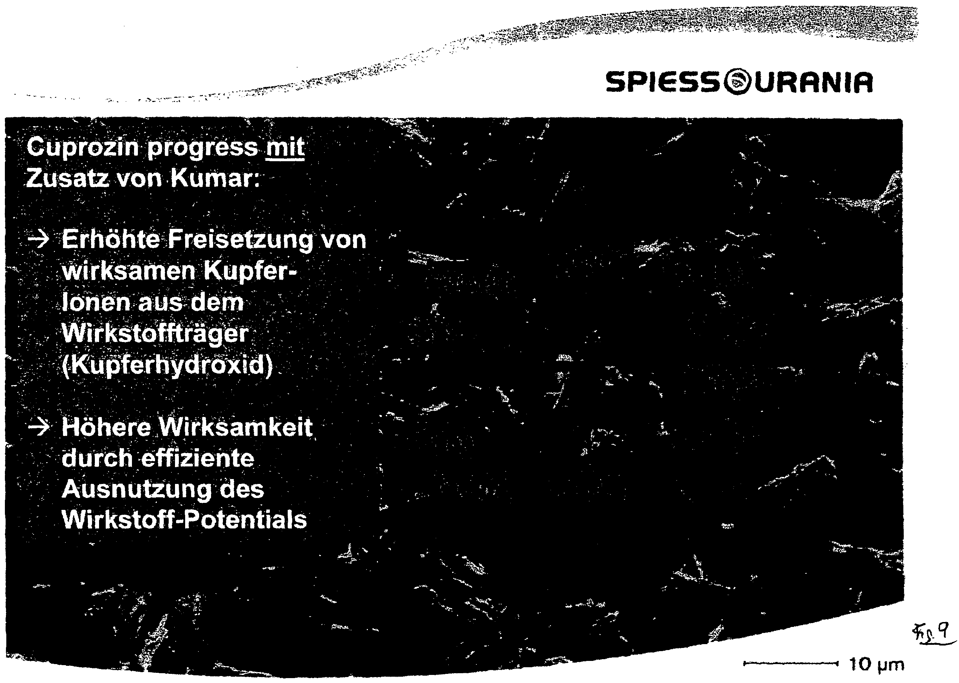

Fig. 9 ein Diagramm zur Veranschaulichung weiterer Vorteile der Wirkstoffkombination,

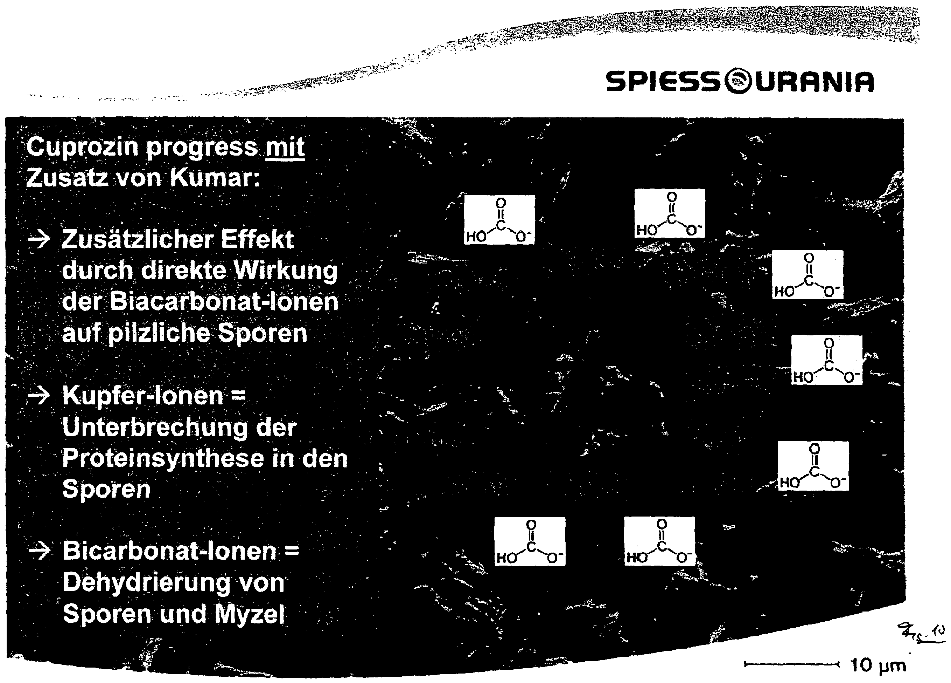

Fig. 10 eine Erläuterung weiterer Vorteile der Wirkstoffkombination,

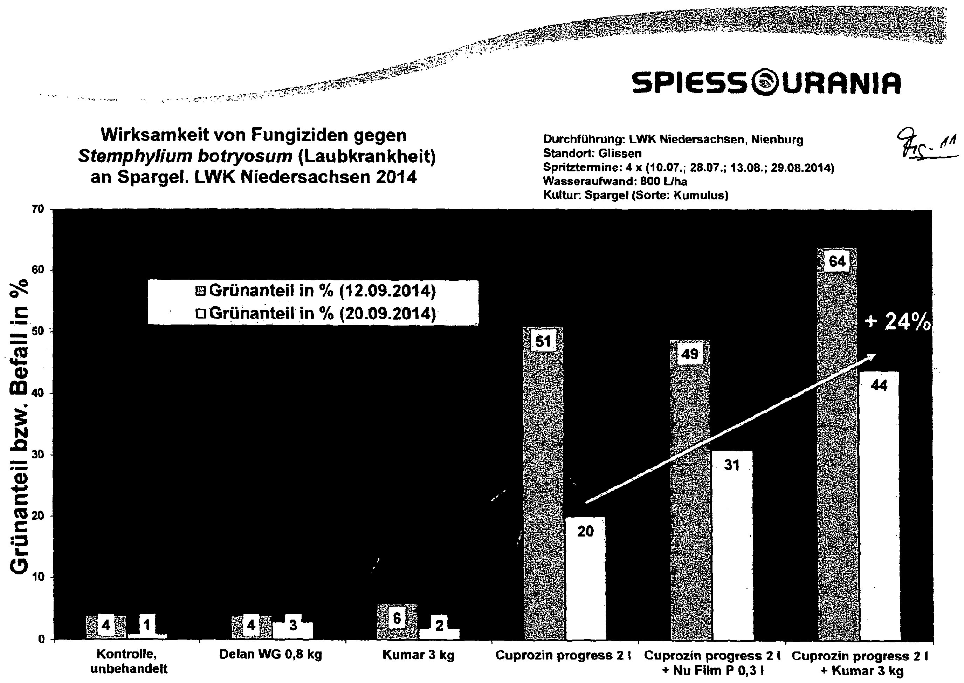

Fig. 11 eine Dokumentation zu einem Anwendungsbeispiel,

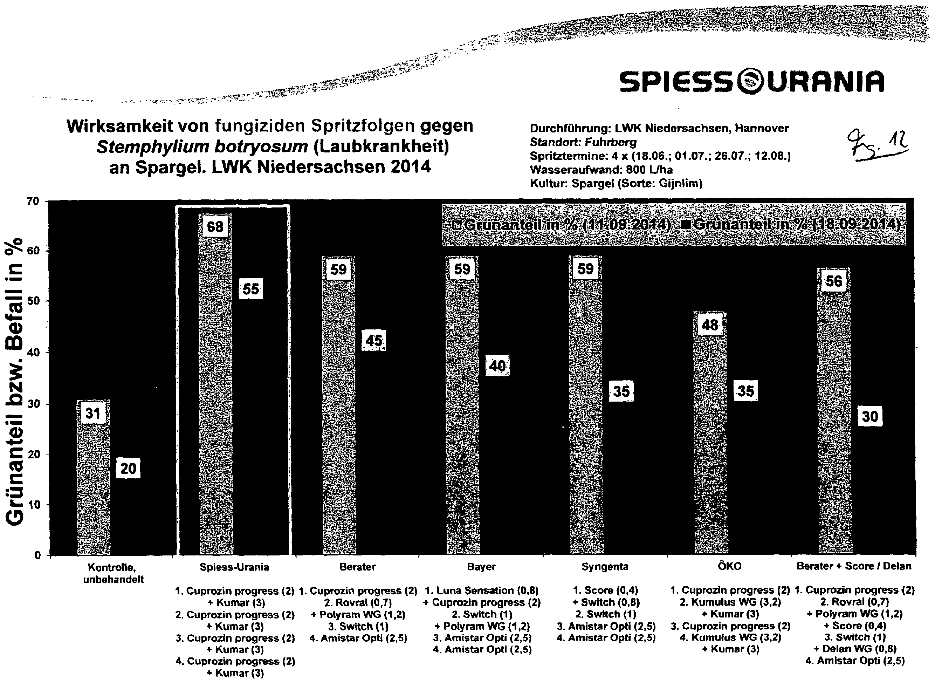

Fig. 12 eine Dokumentation zu einem weiteren Anwendungsbeispiel,

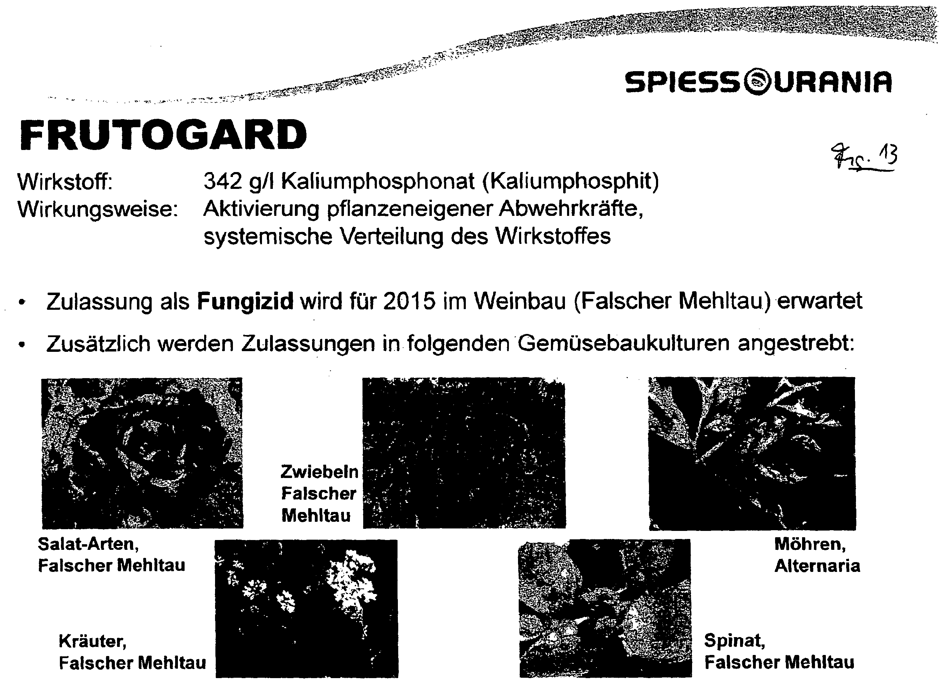

Fig. 13 weitere Details zu einem Anwendungsbeispiel,

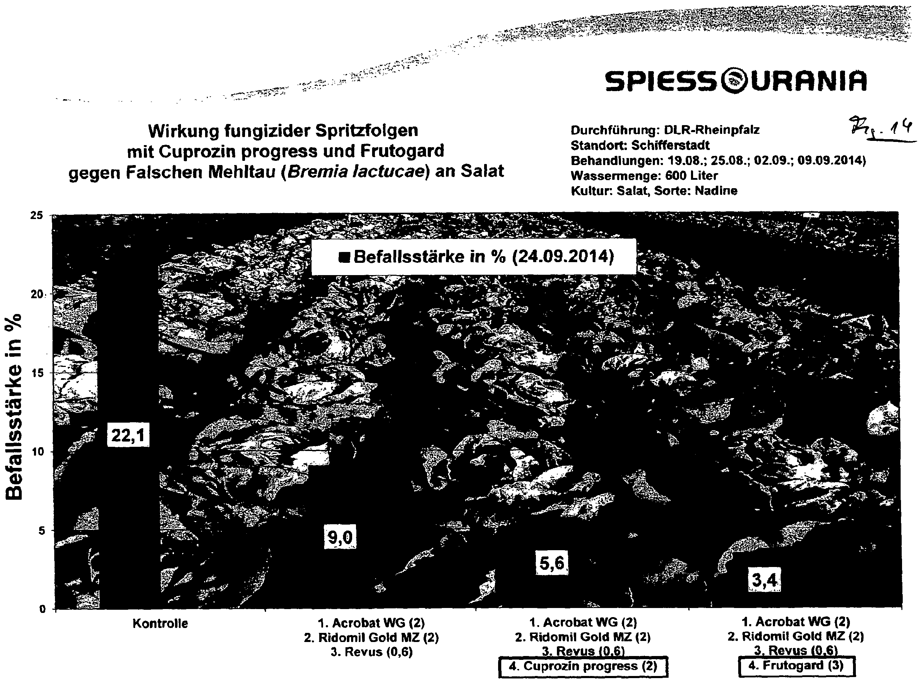

Fig. 14 eine bildliche Darstellung von Wirkungen einer Anwendung als Spritzmittel,

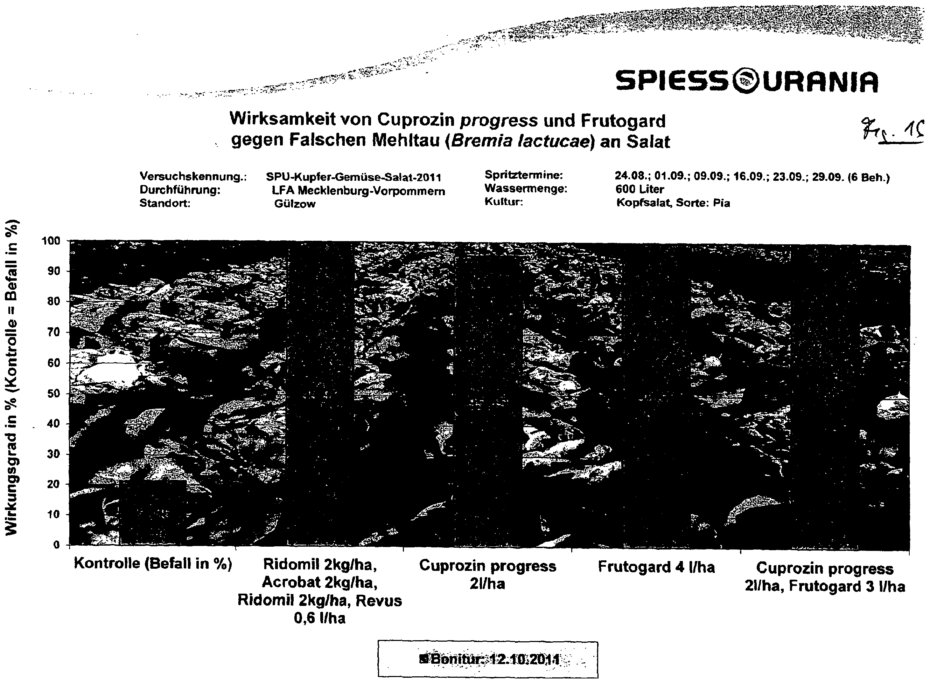

Fig. 15 eine Grafik zur Veranschaulichung der Wirksamkeit einer Wirkstoffkombination,

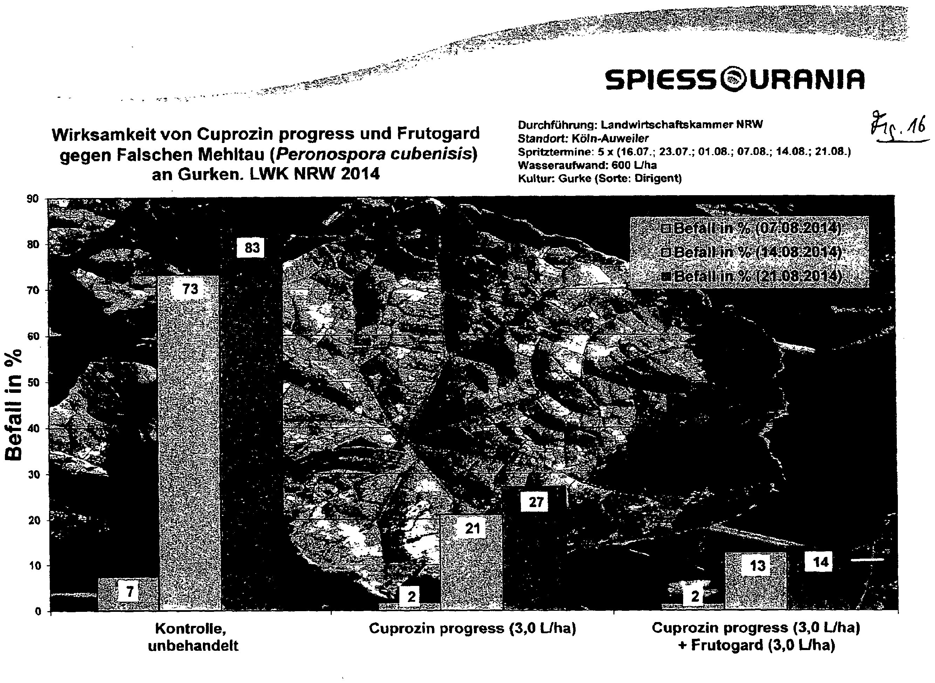

Fig. 16 eine bildliche Darstellung zur Veranschaulichung der Wirkung einer Wirkstoffkombination,

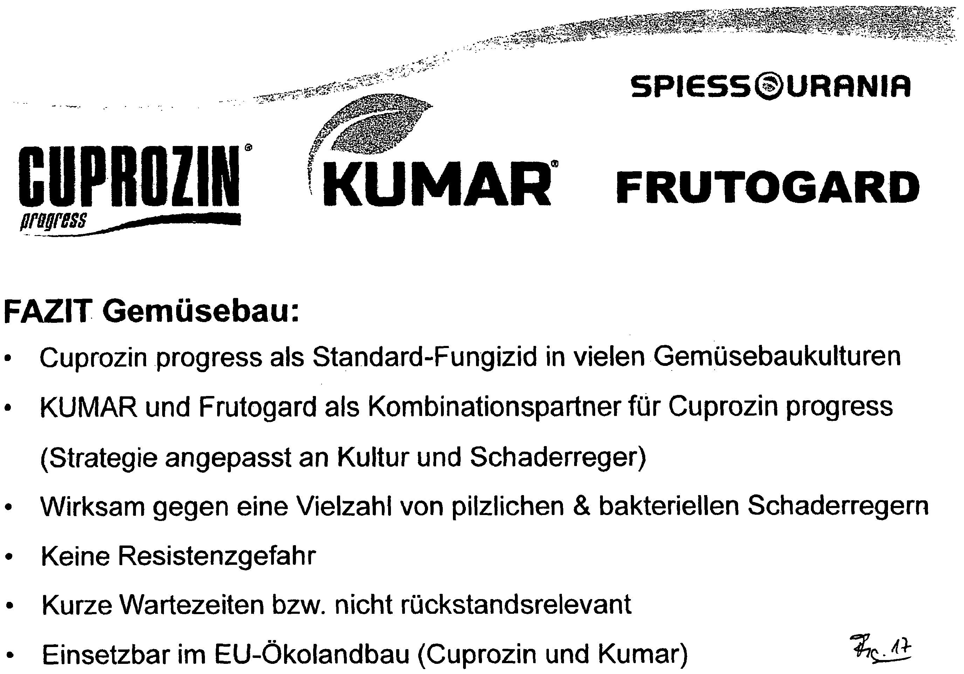

Fig. 17 eine weitere Zusammenstellung von Vorteilen einer Wirkstoffkombination,

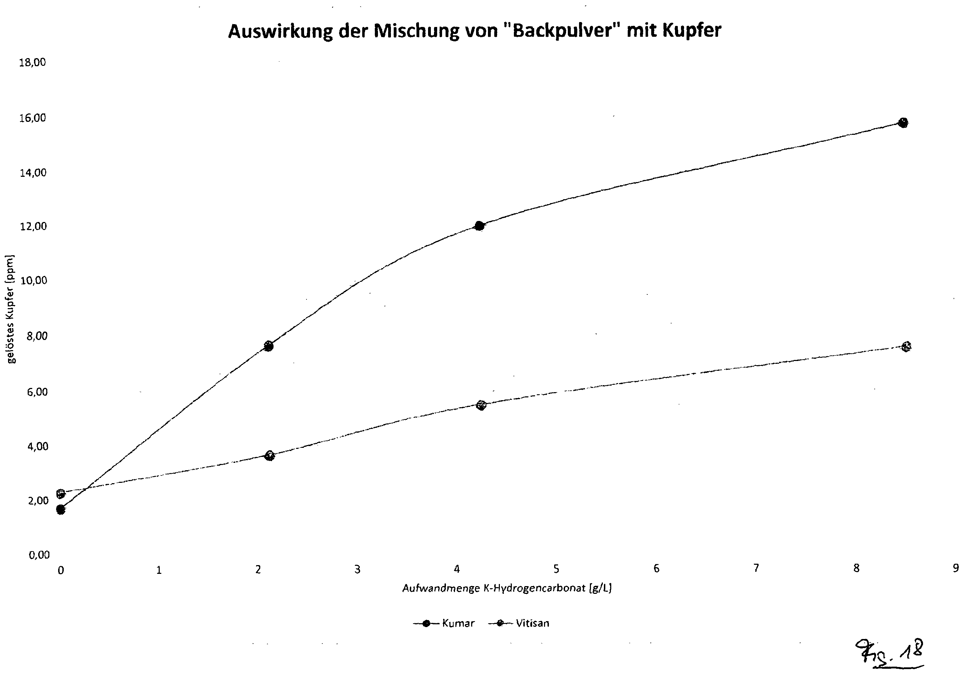

Fig. 18 ein Diagramm zur Veranschaulichung der Wirksamkeit einer Wirkstoffkombination,

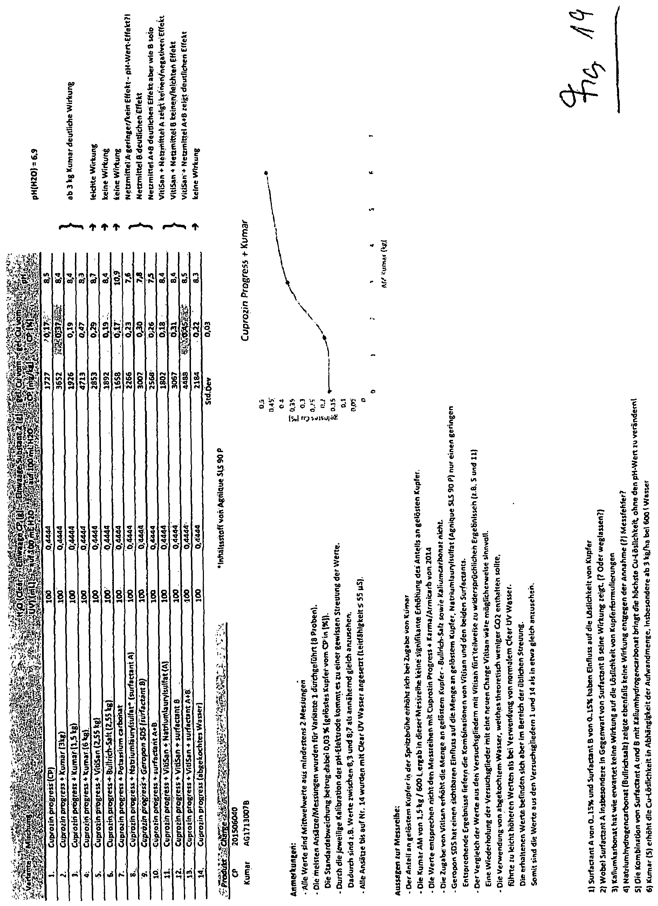

Fig. 19 eine tabellarische Zusammenstellung von Versuchsergebnissen,

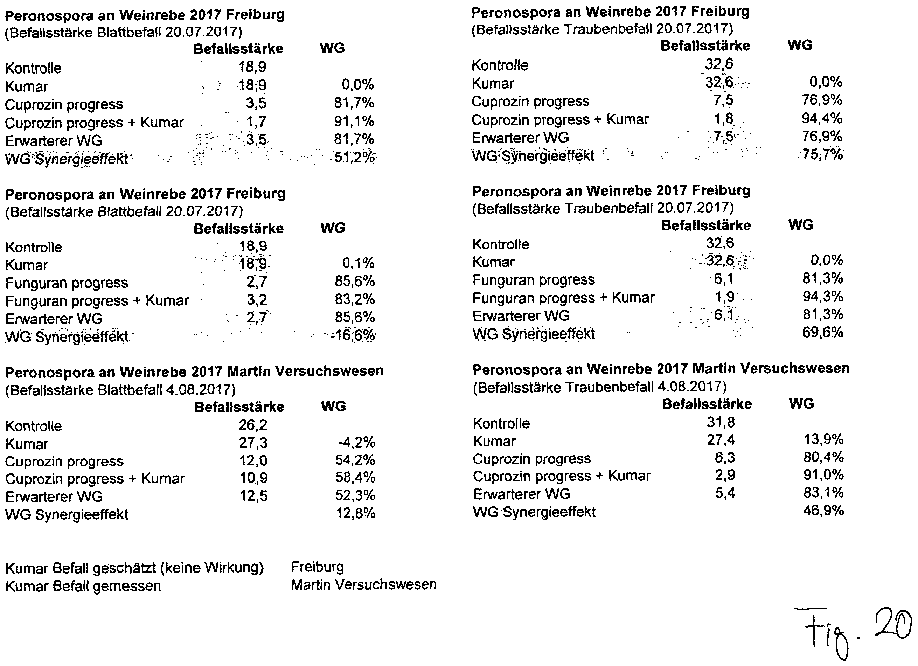

Fig. 20 eine tabellarische Zusammenfassung von Versuchsergebnissen aus dem Jahr 2017,

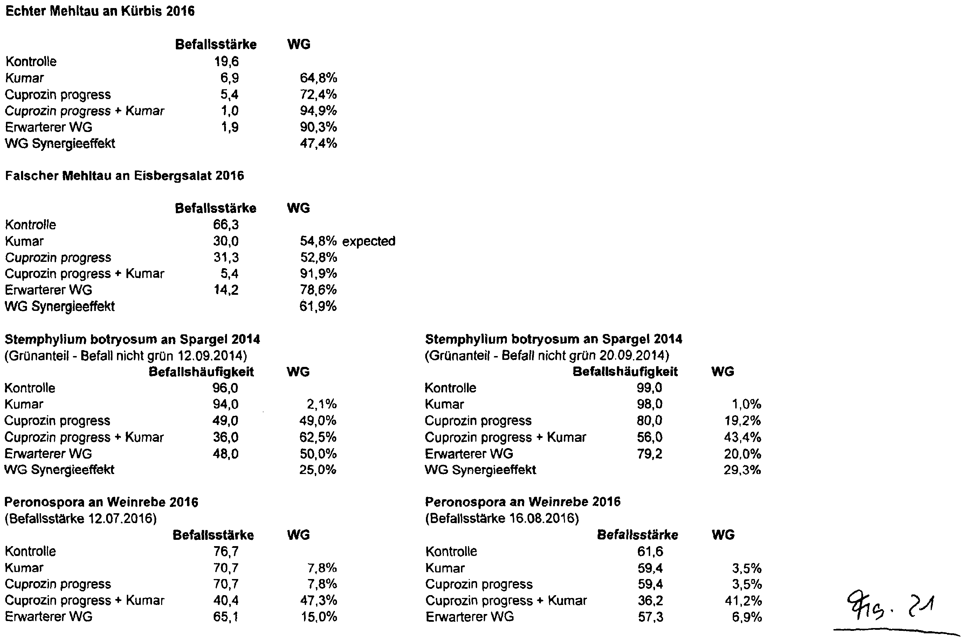

Fig. 21 eine tabellarische Zusammenfassung von Versuchsergebnissen aus den Jahren 2014 und 2016,

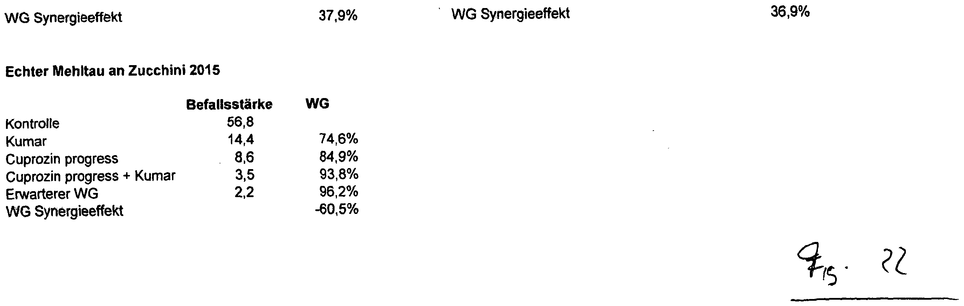

Fig. 22 eine Fortsetzung der Tabelle gemäß Figur 21 für das Jahr 2015,

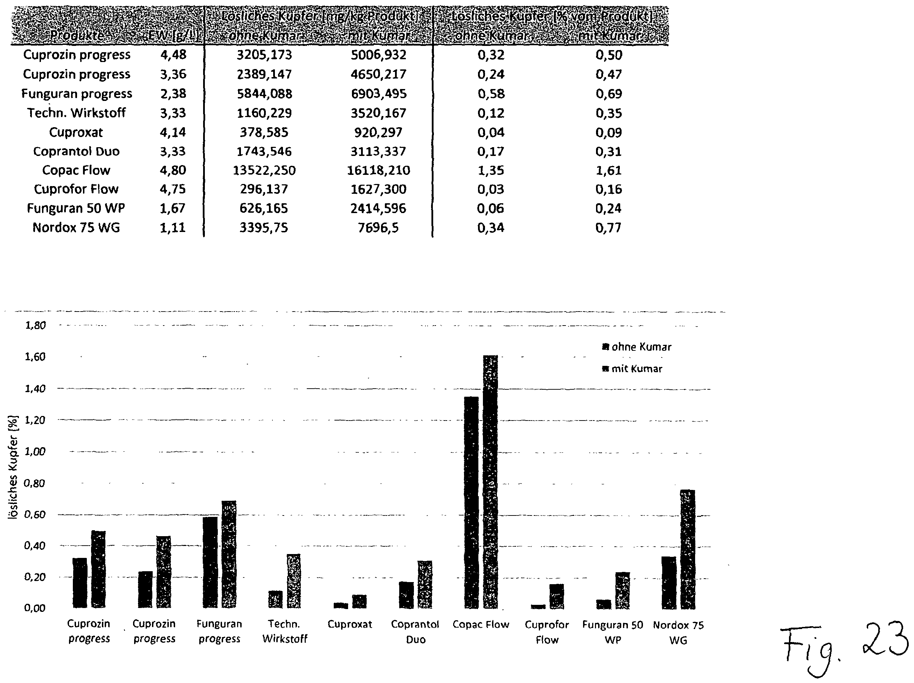

Fig. 23 eine tabellarische Aufstellung des löslichen Kupfers in verschiedenen Produkten sowie die graphische Darstellung dieser Tabelle,

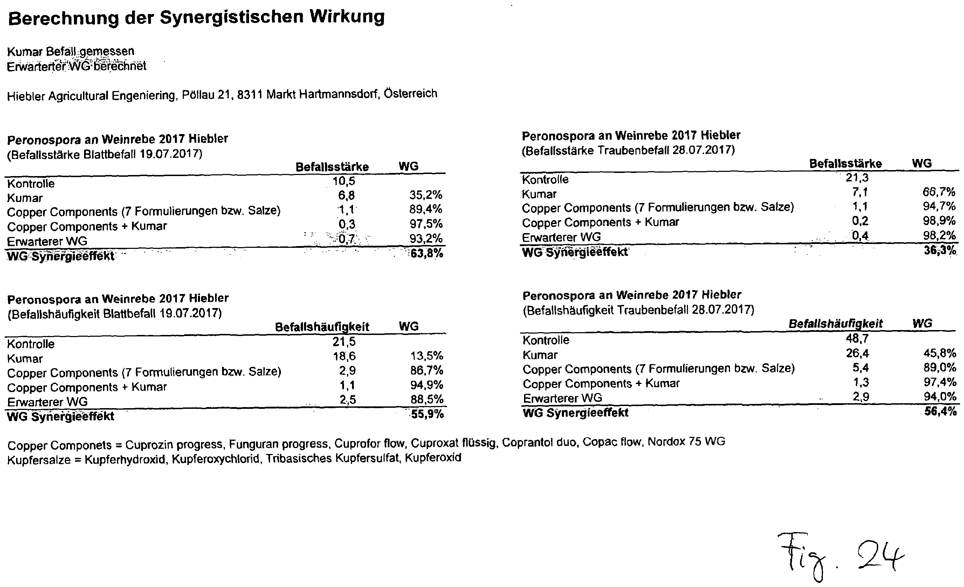

Fig. 24 eine Tabelle mit Berechnungen der synergetischen Wirkung und

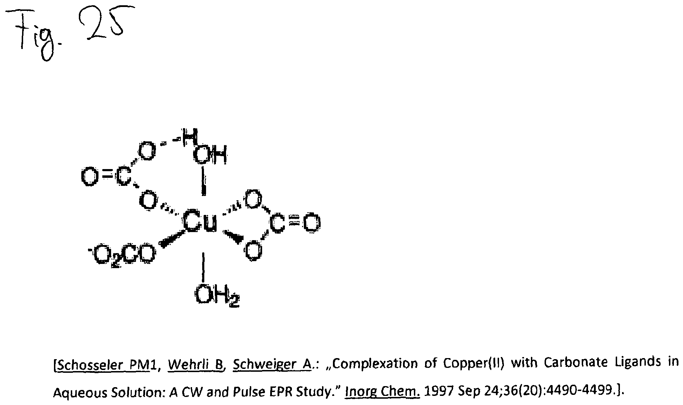

Fig. 25 eine Darstellung eines Kupferkomplexes mit Carbonato-Liganden in einer wässrigen Lösung.

## Patentansprüche

1. Präparat zur Verwendung als Pflanzenschutzmittel, das mindestens eine kupferhaltige Komponente, mindestens eine basische Komponente und mindestens ein Netzmittel aufweist;
**dadurch gekennzeichnet, dass** das Netzmittel ausgewählt ist aus Docusatnatrium oder einer Kombination aus Docusatnatrium und Natriumdodecylsulfat, und dass die basische Komponente Kaliumhydrogenkarbonat und/oder Natriumhydrogenkarbonat ist.

2. Präparat nach Anspruch 1, **dadurch gekennzeichnet, dass** die kupferhaltige Komponente Kupferionen enthält.

3. Präparat nach Anspruch 1 oder 2, **dadurch gekennzeichnet, dass** die kupferhaltige Komponente Kupferhydroxid enthält.

4. Präparat nach Anspruch 1, **dadurch gekennzeichnet, dass** die kupferhaltige Komponente eine Verbindung aus der Gruppe Kupferoxichlorid, Kupferoxidul, tribasisches Kupfersulfat sowie Bordeauxbrühe enthält.

5. Präparat nach Anspruch 1, **dadurch gekennzeichnet, dass** die basische Komponente Kaliumhydrogenkarbonat ist.

6. Präparat nach mindestens einem der Ansprüche 1 bis 5, **dadurch gekennzeichnet, dass** eine Ausbildung als Flüssigpräparat bzw. als Tankmischung vorliegt.

7. Präparat nach mindestens einem der Ansprüche 1 bis 5, **dadurch gekennzeichnet, dass** eine Ausbildung als Fertigpräparat, beispielsweise in Form von Pulver oder Granulat, vorliegt.

8. Verwendung eines Präparats nach mindestens einem der Ansprüche 1 bis 7, **dadurch gekennzeichnet, dass** die Wirkstoffkombination eine fungizide Wirkung aufweist.

9. Verwendung eines Präparats nach mindestens einem der Ansprüche 1 bis 7, im Gemüseanbau, Hopfenbau, Weinbau oder Ackerbau.

10. Verwendung eines Präparats nach Anspruch 9, für Spargel oder Hopfen oder Weinpflanzen.

11. Verwendung eines Präparats nach Anspruch 9, für Ackerbaupflanzen.

12. Verwendung eines Präparats nach Anspruch 9, **dadurch gekennzeichnet, dass** die Ackerbaupflanzen ausgewählt sind aus Kartoffeln, Rüben oder Getreide.

## Claims

1. Preparation for use as a plant protection agent, which has at least one copper-containing component, at least one basic component and at least one wetting agent;
**characterised in that** the wetting agent is selected from docusate sodium or a combination of docusate sodium and sodium dodecyl sulphate and that the basic component is potassium hydrogen carbonate and/or sodium hydrogen carbonate.

2. Preparation according to claim 1, **characterised in that** the copper-containing component contains copper ions.

3. Preparation according to claim 1 or 2, **characterised in that** the copper-containing component contains copper hydroxide.

4. Preparation according to claim 1, **characterised in that** the copper-containing component contains a compound from the group copper oxychloride, cuprous oxide, tribasic copper sulphate and Bordeaux mixture.

5. Preparation according to claim 1, **characterised in that** the basic component is potassium hydrogen carbonate.

6. Preparation according to at least one of claims 1 to 5, **characterised in that** a formation as a liquid preparation or as a tank admixture is present.

7. Preparation according to at least one of claims 1 to 5, **characterised in that** a formation as a ready-to-use preparation, for example, in the form of powder or granulate, is present.

8. Use of a preparation according to at least one of claims 1 to 7, **characterised in that** the active ingredient combination has a fungicidal action.

9. Use of a preparation according to at least one of claims 1 to 7 in vegetable cultivation, hop growing, viticulture or agriculture.

10. Use of a preparation according to claim 9 for asparagus or hops or vines.

11. Use of a preparation according to claim 9 for agricultural crops.

12. Use of a preparation according to claim 9 **characterised in that** the agricultural crops are selected from potatoes, beets or cereals.

## Revendications

1. Préparation pour une utilisation en tant qu'agent de protection phytosanitaire, présentant au moins un composant contenant du cuivre, au moins un composant basique et au moins un agent mouillant ;
**caractérisée en ce que** l'agent mouillant est choisi parmi le docusate de sodium ou une combinaison de docusate de sodium et de dodécylsulfate de sodium, et **en ce que** le composant basique est l'hydrogénocarbonate de potassium et/ou l'hydrogénocarbonate de sodium.

2. Préparation selon la revendication 1, **caractérisée en ce que** le composant contenant du cuivre contient des ions cuivre.

3. Préparation selon la revendication 1 ou 2, **caractérisée en ce que** le composant contenant du cuivre contient de l'hydroxyde de cuivre.

4. Préparation selon la revendication 1, **caractérisée en ce que** le composant contenant du cuivre contient un composé du groupe constitué par l'oxychlorure de cuivre, l'oxyde de cuivre, le sulfate de cuivre tribasique et la bouillie bordelaise.

5. Préparation selon la revendication 1, **caractérisée en ce que** le composant basique est l'hydrogénocarbonate de potassium.

6. Préparation selon au moins l'une des revendications 1 à 5, **caractérisée en ce qu'**elle est conçue sous forme de préparation liquide ou respectivement de mélange en cuve.

7. Préparation selon au moins l'une des revendications 1 à 5, **caractérisée en ce qu'**elle est conçue sous la forme d'une préparation prête à l'emploi, par exemple sous forme de poudre ou de granulat.

8. Utilisation d'une préparation selon au moins l'une des revendications 1 à 7, **caractérisée en ce que** la combinaison de principes actifs a une action fongicide.

9. Utilisation d'une préparation selon au moins l'une des revendications 1 à 7 dans la culture maraîchère, la culture du houblon, la viticulture ou l'agriculture.

10. Utilisation d'une préparation selon la revendication 9 pour l'asperge ou le houblon ou des plantules de vigne.

11. Utilisation d'une préparation selon la revendication 9 pour des cultures agricoles.

12. Utilisation d'une préparation selon la revendication 9, **caractérisée en ce que** les cultures agricoles sont choisies parmi les pommes de terre, les betteraves ou les céréales.
